Europäisches Patentamt

European Patent Office

Office européen des brevets

(11) Numéro de publication: **0 352 684 B1**

## (12) FASCICULE DE BREVET EUROPEEN

(45) Date de publication de fascicule du brevet: **03.03.93**

(51) Int. Cl.⁵: **B01D 53/22**, B01D 63/00, B01D 63/06, B01D 46/54, B01D 53/36

(21) Numéro de dépôt: **89113553.5**

(22) Date de dépôt: **24.07.89**

(54) **Module pour éléments cylindriques rigides à membrane de séparation de filtration ou de transformation catalytique.**

(30) Priorité: **29.07.88 FR 8810280**

(43) Date de publication de la demande:
**31.01.90 Bulletin 90/05**

(45) Mention de la délivrance du brevet:
**03.03.93 Bulletin 93/09**

(84) Etats contractants désignés:
**BE CH DE ES FR GB IT LI NL SE**

(56) Documents cités:
**EP-A- 0 046 889**
**EP-A- 0 166 994**
**US-A- 4 632 681**

(73) Titulaire: **SOCIETE DES CERAMIOUES TECH-NIOUES**

**F-65460 Bazet(FR)**

(72) Inventeur: **Garcera, Daniel**
**2bis, boulevard de l'Abattoir**
**F-65000 Tarbes(FR)**
Inventeur: **Gillot, Jacques**
**5, Impasse de la Hount**
**F-65310 Laloubere(FR)**

(74) Mandataire: **Weinmiller, Jürgen et al**
**Lennéstrasse 9 Postfach 24**
**W-8133 Feldafing (DE)**

## Description

La présente invention concerne un module pour éléments cylindriques rigides à membrane de séparation, de filtration ou de transformation catalytique.

Un tel module comporte schématiquement une enveloppe ou carter où sont montés lesdits éléments rigides qui peuvent être des membranes ou des supports de membrane. Ces éléments qui sont constitués d'un matériau rigide tel que la céramique, le verre, le carbone ou un métal, seront désignés ci-dessous par éléments actifs.

De manière plus précise un module comporte :

- Une enveloppe en général cylindrique constituée d'un métal ou d'une matière plastique renforcée ou non par des fibres :
- Un ou plusieurs éléments actifs qui ont en général une géométrie tubulaire ou quasi tubulaire, en particulier du type multicanal, telle qu'elle est décrite dans les publications suivantes :
  - J. GILLOT et D. GARCERA - "Nouveaux Media Filtrants Céramiques pour Microfiltration Tangentielle et Ultrafiltration" - Conférence FILTRA 84 - Sté Française de filtration Oct. 1984 PARIS.
  - J. GILLOT - G. BRINKMAN - D. GARCERA - "New Ceramic Filter Media for Crossflow Microfiltration and Ultrafiltration". Fourth World Filtration Congress 22-24 April 1986 - Ostende Belgium.

  et qui sont en général beaucoup plus longs dans la direction du canal que transversalement à ce canal. Ces éléments actifs sont assemblés avec l'axe de leur canal, ou de leurs canaux, parallèle à l'axe de l'enveloppe. La membrane recouvre la surface intérieure du ou des canaux de ces éléments, ou dans certains cas la surface extérieure, quand il s'agit de tubes.
- Un ensemble de deux plaques d'extrémité (en général très rigides) et de joints qui :
  - supportent mécaniquement les éléments actifs à leurs deux extrémités et les maintiennent en position ;
  - séparent dans l'installation de traitement de fluide une région amont et une région aval par rapport à la membrane ;
  - assurent l'étanchéité entre ces deux régions.
- Des pièces situées à l'intérieur ou à la périphérie du faisceau d'éléments actifs et parallèles à ces éléments, et dont la fonction est de solidariser les plaques d'extrémité sur le plan mécanique. Ces pièces, qui n'ont pas de fonction sur le plan traitement du fluide proprement dit, seront appelées ci-dessous chandelles. Elles ne sont nécessaires que dans le cas où le module comporte un grand nombre d'éléments actifs.

Un tel module doit pouvoir fonctionner pendant plusieurs années sans être démonté. Or il apparaît des différences de dilatation longitudinale entre les éléments actifs, d'une part, et l'enveloppe et les chandelles, d'autre part, quand on soumet le module à des variations de température importantes, en particulier quand on l'assemble à température ambiante et qu'on l'utilise à haute ou à basse température. Ces différences de dilatation peuvent atteindre un à plusieurs millimètres quand les éléments actifs ont une longueur de l'ordre d'un mètre, ce qui est fréquent. En général, on ne maîtrise pas cet écart de dilatation car les matériaux constituant les éléments actifs d'une part, l'enveloppe et les chandelles d'autre part, sont normalement différents puisqu'ils répondent à des impératifs différents. Dans le cas du montage d'éléments actifs en céramique poreuse dans une enveloppe métallique à coefficient de dilatation en général plus élevé, l'utilisation à haute température a tendance à mettre les éléments céramiques en tension, ce qu'ils supportent mal.

Dans les montages connus, l'écart de dilatation est encaissé de deux façons :

Dans le cas où les plaques d'extrémité sont fixées sur l'enveloppe, ainsi que dans le cas où il y a des chandelles, l'écart de dilatation doit être encaissé par les joints situés entre les extrémités des éléments actifs et les plaques d'extrémité. Ceci nécessite à au moins une extrémité de chaque élément :

- soit un joint glissant dont l'étanchéité est alors difficile à maintenir en cas de cyclage thermique, surtout dans le cas où le fluide à traiter contient des particules en suspension (filtration) qui viennent se loger entre les surfaces en regard dans le joint ;
- soit des joints souples qui peuvent être du type soufflet métallique, ce qui est très onéreux, ou du type joint élastomérique. Dans ce dernier cas, le joint doit être assez large latéralement pour que la déformation angulaire résultant d'un écart de dilatation longitudinale de plusieurs millimètres reste acceptable, ce qui aboutit à un encombrement exagéré du faisceau d'éléments actifs. Par ailleurs, on bute alors sur les problèmes liés à la nature des élastomères : absence d'élasticité aux températures cryogéniques, et tenues mécanique et chimique insuffisantes aux hautes températures pendant une longue durée en présence des fluides à traiter.

Dans le cas où il n'y a pas de chandelle et où le module comprend plusieurs éléments actifs, l'écart de dilatation peut être encaissé par un joint glissant ou souple situé à la périphérie d'une plaque d'extrémité, entre cette plaque et l'enveloppe. Mais cette solution présente l'inconvénient de reporter sur les joints entre les éléments actifs et les plaques d'extrémité les efforts provenant de la différence de pression du fluide de part et d'autre des plaques d'extrémité : ces joints sont alors sollicités en cisaillement. De plus, ces efforts sont alors transmis aux éléments actifs eux-mêmes qui sont alors sollicités en traction ou en compression. Dans le cas d'une filtration tangentielle avec décolmatage fréquent des membranes par inversion de pression, les éléments filtrants sont alors soumis à une succession de tractions et de compressions, ce que est très défavorable.

Le but de l'invention est donc la réalisation d'une structure de module telle que les plaques d'extrémité et les joints n'aient à encaisser que de faibles différences de dilatation résiduelles, dues par exemple à une mauvaise répartition des températures à l'intérieur du module.

La présente invention a pour objet un module pour éléments cylindriques rigides à membrane de séparation, de filtration ou de transformation catalytique, lesdits éléments étant logés dans une enveloppe globalement cylindrique parallèle à ces éléments, et fermée par une première plaque d'extrémité et une seconde plaque d'extrémité où sont fixées les extrémités desdits éléments par l'intermédiaire de joints, caractérisé par le fait que ces plaques d'extrémité sont reliées par au moins une entretoise constituée d'au moins trois pièces oblongues juxtaposées, la première pièce étant solidaire de ladite première plaque d'extrémité, la troisième pièce étant solidaire de ladite seconde plaque d'extrémité, la second pièce étant fixée aux extrémités libres de ladite première et ladite troisième pièce, les matériaux de ces trois pièces étant choisis de manière que leur dilatation globale soit aussi égale que possible à celle desdits éléments actifs.

Selon un premier mode de réalisation ladite entretoise constitue ladite enveloppe.

Selon un second mode de réalisation ledit module comporte une ou plusieurs entretoises formant une ou plusieurs chandelles disposées entre lesdites plaques d'extrémité.

Selon un troisième mode de réalisation ledit module comporte une entretoise formant ladite enveloppe et au moins une entretoise formant au moins une chandelle.

Dans une première variante ladite entretoise est formée de trois pièces cylindriques coaxiales.

Des moyens de calage latéral sont avantageusement prévus entre lesdites pièces, et/ou entre ou moins une desdites pièces et une des plaques d'extrémité.

Lesdites pièces cylindriques peuvent être solidarisées au niveau de leurs extrémités directement par soudage, frettage, collage.

Selon un autre mode d'assemblage, lesdites pièces cylindriques sont solidarisées au niveau de leurs extrémités par l'intermédiaire de bagues soudées, vissées, frettées, collées, lesdites bagues pouvant en outre constituer des cales entre lesdites pièces cylindriques.

Selon une autre variante de réalisation chaque pièce de ladite chandelle est formée de n tiges pleines parallèles entre elles et auxdits éléments actifs.

Ainsi, lesdites tiges passent dans des bagues de guidage latéral dans lesquelles soit elles coulissent, soit elles sont fixées.

A des fins de calage latéral, l'une des tiges peut avoir une extrémité pénétrant dans un trou borgne d'une plaque d'extrémité.

L'invention a également pour objet un module, comportant au moins une chandelle selon l'invention et une enveloppe formée d'une pièce cylindrique dont une extrémité est fixée rigidement à ladite première plaque d'extrémité et dont l'autre extrémité est reliée de manière étanche à ladite seconde plaque d'extrémité par l'intermédiaire d'un joint déformable, ledit joint déformable étant choisi parmi les joints de type glissant, soufflet en métal ou en élastomère.

D'autres caractéristiques et avantages de la présente invention apparaîtront au cours de la description suivante de modes de réalisation donnés à titre illustratif mais nullement limitatif.

- La figure 1 illustre très schématiquement en coupe longitudinale un premier exemple de module selon l'invention avec une enveloppe en trois pièces.
- La figure 2 illustre très schématiquement en coupe longitudinale une variante de réalisation du module de la figure 1.
- La figure 3 illustre très schématiquement en coupe longitudinale un exemple de chandelle selon l'invention à trois pièces concentriques.
- La figure 4 illustre schématiquement en perspective un autre exemple de chandelle selon l'invention comportant des tiges pleines.
- La figure 5 illustre très schématiquement en coupe partielle une variante de module selon l'invention, destinée à contenir un grand nombre d'éléments actifs.
- La figure 6 montre schématiquement un mode de fixation par soudage direct des trois pièces d'une enveloppe de module selon l'invention.
- La figure 7 montre schématiquement un autre mode de fixation par soudage des trois pièces d'une enveloppe de module selon l'invention.
- Les figures 8 à 11 montrent schématiquement quatre exemples de fixation par visage des trois pièces d'une enveloppe d'un module selon l'invention.

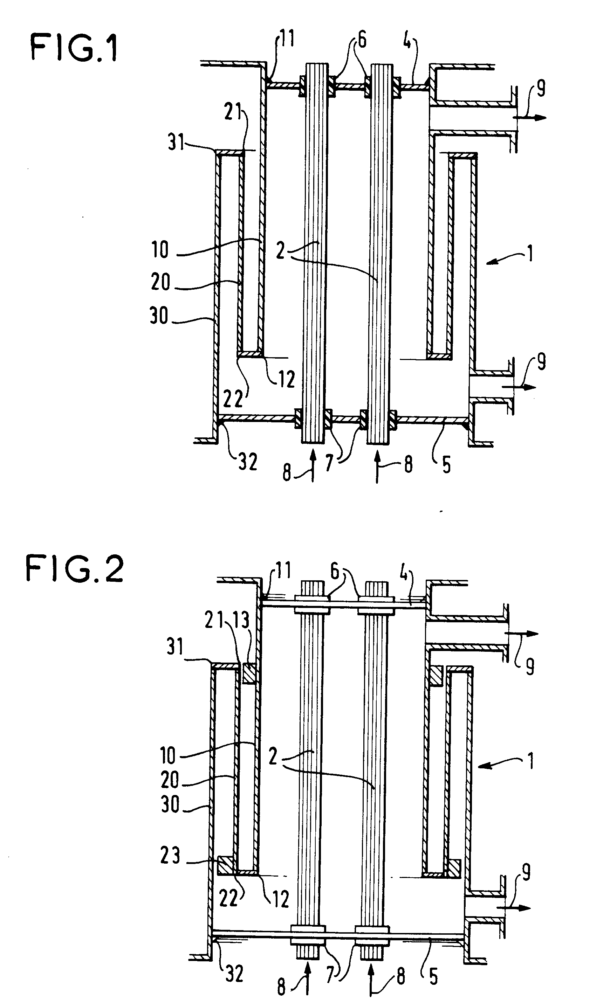

On voit dans la figure 1 un module 1 comportant deux éléments actifs 2 dont les premières extrémités sont fixées dans une première plaque 4 avec des joints 6 interposés, et dont les secondes extrémités sont fixées dans une seconde plaque 5 avec des joints 7 interposés. Bien entendu un module comporte généralement un faisceau d'éléments actifs 2. On a référencé respectivement 8 et 9, l'entrée et la sortie du fluide à traiter.

Selon l'invention l'enveloppe latérale globalement cylindrique qui relie les deux plaques 4 et 5 est formée de trois pièces coaxiales 10, 20, 30, dont les bords extrêmes sont notés respectivement (11, 12), (21, 22), (31, 32). Les bords 11, 21 et 31 sont situés du côté de la première plaque 4 tandis que les bords 12, 22, 32 sont situés du côté de la seconde plaque 5. Le bord 12 est raccordé au bord 22 et le bord 21 au bord 31. En d'autres termes, le cheminement pour aller d'une plaque d'extrémité à l'autre du module 1 passe par la pièce 10, revient en arrière par la pièce 20, et repart dans la direction initiale par la pièce 30. Les pièces 10, 20, 30 sont choisies en des matériaux tels que la dilatation de l'enveloppe qu'elles forment soit égale à celle des éléments actifs 2 assemblés dans le module 1.

Dans le cas où le coefficient de dilatation des éléments actifs 2 est inférieur à celui des pièces 10 et 30, on choisit pour réaliser la pièce 20 un matériau à coefficient de dilatation plus élevé que celui des pièces 10 et 30 de façon à ce que, quand la température augmente, l'allongement de la pièce 20 écarte les extrémités 12 et 31, ce qui tend à rapprocher les extrémités 11 et 32 du module 1, en compensant ainsi l'excès d'allongement des pièces 10 et 30 par rapport aux éléments actifs 2.

En fait, si on appelle L1, L2, L3 les longueurs des pièces 10, 20 et 30 et Le la longueur des éléments actifs, ces longueurs étant mesurées à partir du plan milieu des joints d'assemblage 6 et 7 des éléments actifs 2 sur les plaques d'extrémité 4 et 5 et D1, D2, D3 et De les coefficients de dilatation des pièces 10, 20, 30 et des éléments actifs 2, la compensation de dilatation est obtenue quand

D1L1 - D2L2 + D3L3 = DeLe
avec L1 - L2 + L3 = Le

Dans la variante illustrée dans la figure 2, on souhaite donner plus de rigidité à l'ensemble ; on prévoit des butées latérales 13 et 23 de manière à assurer le calage de chaque extrémité de la pièce 20 par rapport à l'extrémité des pièces 10 et 30 à laquelle elle n'est pas liée (calage de l'extrémité 21 par rapport à l'extrémité 11, calage de l'extrémité 22 par rapport à l'extrémité 32). Les butées 13 et 23 sont placées, soit sur la pièce intermédiaire 20, soit sur les pièces 10 et 30. La surface de l'autre pièce qui vient en regard de la butée est usinée de manière à assurer un coulissement libre. Les tolérances sont fixées pour tenir compte des différences de dilatation entre pièces 10, 20 et 30 perpendiculairement à leur axe commun.

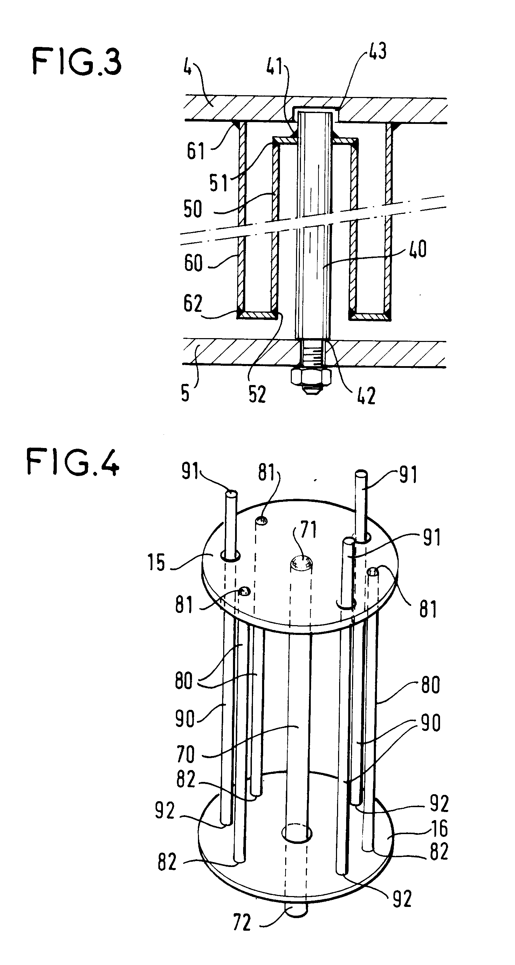

On voit dans la figure 3 un exemple de chandelle en trois pièces 40, 50, 60 selon l'invention située entre les deux plaques d'extrémité 4 et 5. Comme pour les pièces 10, 20, 30, on a référencé leurs extrémités (41, 51, 61), (42, 52, 62). Ces trois pièces sont disposées de manière concentrique mais la pièce 40 est une tige pleine dont l'extrémité 41 se cale latéralement dans un trou borgne 43 prévu dans le plaque d'extrémité 4. Les pièces 40, 50 et 60 sont solidarisées entre elles de la même manière que les pièces 10, 20, 30.

La figure 4 illustre une variante de réalisation de chandelle selon l'invention où les tubes sont remplacés par des tiges pleines guidées latéralement ou solidarisées à deux brides intermédiaires 15 et 16.

La tige centrale 70 solidarisée en 71 à la bride 15 est destinée à être fixée à son extrémité 72 à la plaque d'extrémité 5 du module.

Les trois tiges intermédiaires 80 ont leurs extrémités 81, 82 liées respectivement aux brides 15 et 16.

Les trois tiges extérieures 90 ont leurs extrémités 91 destinées à être fixées à la plaque d'extrémité 4 du module, tandis que les extrémités 92 sont fixées à la bride intermédiaire 16. Les tiges 80 et 90 sont disposées en étoile autour de la tige 70. Les tiges 90 sont décalées de 360/3 degrés les unes par rapport aux autres et de 360/3 x 2 degrés par rapport aux tiges 80. (Le nombre 3 n'est pas limitatif). La tige 70 peut coulisser dans la bride 6, tandis que les tiges 90 peuvent coulisser dans la bride 15.

Par ailleurs, les tiges peuvent pénétrer à des fins de calage latéral dans des trous borgnes situés dans la plaque d'extrémité 4 ou 5 sur laquelle elles ne sont pas fixées.

Les chandelles à tubes concentriques offrent l'avantage d'un moindre encombrement que les chandelles à tube central et à tiges. Par contre, lors de variations de température du fluide à l'intérieur du module, elles présentent l'inconvénient que le tube intérieur et le tube intermédiaire ne suivent la variation de température qu'avec retard, ce qui empêche une bonne compensation des dilatations. Une variante particulièrement intéressante est donc l'utilisation de chandelles en tubes concentriques où le tube extérieur et le tube intermédiaire (et éventuellement le tube intérieur) présentent sur leur surface latérale des ouvertures destinées à faciliter la circulation du fluide au contact du tube intérieur et du tube intermédiaire, de manière à ce que leur température reste toujours voisine de celle du fluide.

Dans toutes les variantes précédentes, les cavités borgnes situées dans l'enceinte remplie de fluide à traiter ont de préférence leur ouverture dirigée vers le bas, pour éviter que des particules ne s'y accumulent par sédimentation.

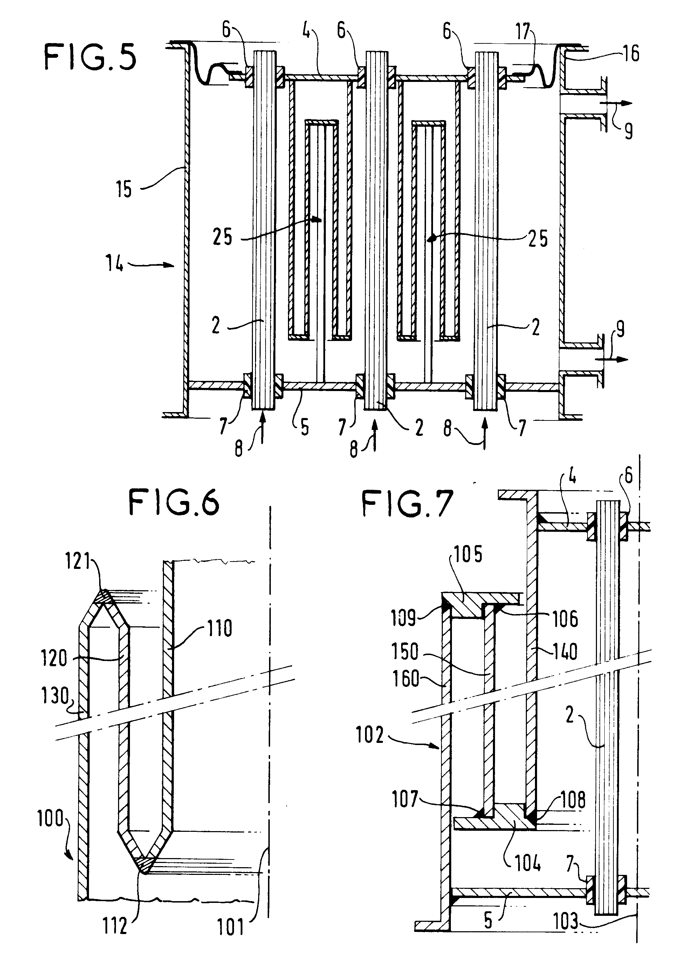

Dans la figure 5 est représenté un module 14 destiné à comporter un grand nombre d'éléments actifs 2 ; on retrouve les plaques d'extrémité 4 et 5. L'enveloppe 15 est une enveloppe cylindrique ordinaire. La plaque d'extrémité 5 est fixée de façon rigide à l'une des extrémités de l'enveloppe 15 tandis que la plaque 4 est reliée à l'autre extrémité 16 par une liaison déformable 17, qui peut être un joint souple étanche, tel qu'un soufflet en métal ou en élastomère, ou un joint glissant. Les deux plaques 4 et 5 sont solidarisées par des chandelles 25 à compensation de température analogues à celle de la figure 3.

Un module de ce type présente les caractéristiques suivantes :
- Les joints 6, 7 entre les éléments actifs 2 et les plaques d'extrémité 4, 5 n'ont pas à compenser de dilatation.
- Les efforts dûs à la différence de pression du fluide de part et d'autre des plaques d'extrémité sont encaissés par les chandelles et ne sont donc retransmis ni aux joints d'extrémité 6, 7 des éléments actifs 2 ni à ces éléments.
- Il n'y a plus qu'un seul joint mobile 17 situé entre une plaque d'extrémité et l'enveloppe 15. Il est alors possible d'utiliser un joint même relativement cher (soufflet métallique). Dans le cas d'un joint en élastomère, il est possible de le refroidir localement puisqu'il est à la périphérie de l'enveloppe, donc relativement accessible. S'il est nécessaire de le remplacer à intervalles réguliers, ceci peut être réalisé sans avoir à démonter les éléments actifs, ce qui est particulièrement intéressant vu la fragilité des céramiques.

On va décrire ci-dessous divers modes d'assemblage des pièces formant l'enveloppe ou les chandelles d'un module selon l'invention.

Dans la figure 6 une enveloppe 100 d'axe 101 comprend trois tubes coaxiaux 110, 120, 130 soudés, collés, ou frettés directement les uns sur les autres en 112 et 121. Pour cela on évase ou on referme légèrement les extrémités des tubes pour les rapprocher.

Dans la figure 7 une enveloppe 102 d'axe 103 comporte trois tubes concentriques 140, 150, 160 où l'on met en oeuvre un soudage, un brasage, ou un collage des tubes sur des brides 104 et 105 qui ont également une fonction de calage. On solidarise successivement au niveau des extrémités 106, 107, 108, 109.

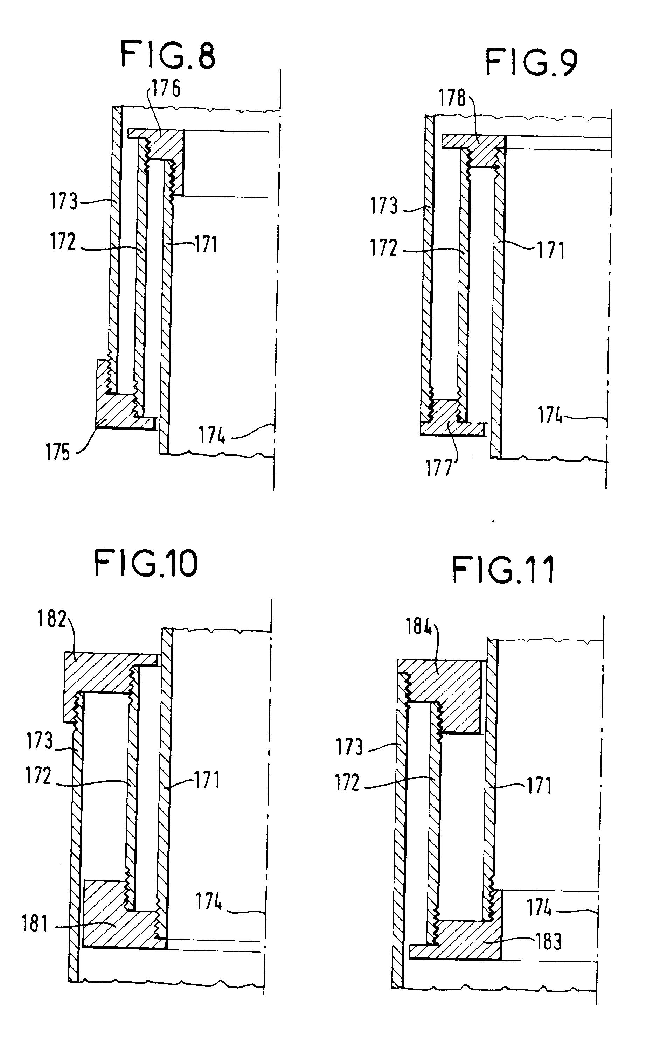

Dans les figures 8 à 11, on utilise un vissage sur des brides qui servent aussi de pièces de calage. Cette disposition s'applique surtout sur des brides de petit diamètre.

Dans ces figures on montre quatre enveloppes d'axe 174 comportant trois cylindres métalliques 171, 172, 173, solidarisés par vissage par l'intermédiaire de bagues qui font également fonction de cales latérales. Ces bagues sont référencées 175 et 176 dans la figure 8, 177 et 178 dans la figure 9, 181 et 182 dans la figure 10, 183 et 184 dans la figure 11.

On peut, en jouant sur le coefficient de dilatation des bagues et sur la disposition relative des filetages mâle et femelle des tubes et des bagues, s'arranger pour que les dilatations différentielles dans le sens perpendiculaire à l'axe ne se traduisent au niveau des filetages que par des contraintes de compression. Par exemple, avec la disposition de la figure 10, si les pièces 171 et 173, ainsi que les deux bagues 181 et 182, ont le même coefficient de dilatation, qui est inférieur à celui de la pièce 172, une élévation de température se traduira par la mise en compression des filetages reliant la pièce 172 aux deux bagues, sans apparition de contrainte dans les autres filetages. La disposition de la figure 11 donnera le même résultat dans le cas d'une baisse de température.

Pour les chandelles à tubes concentriques du type de celle de la figure 3, on peut mettre en oeuvre les mêmes moyens de fixation que pour les enveloppes.

Pour les chandelles à tiges pleines du type de celle de la figure 4, on peut coller, souder, fretter ou visser sur les brides intermédiaires.

On peut toujours utiliser des modes d'assemblage mixtes combinant soudage, collage, frettage et vissage.

Des exemples numériques vont être donnés ci-dessous afin de mieux montrer l'intérêt de la présente invention. Les indications données pour les aciers sont conformes à la norme AFNOR. Dans tous les exemples, les diamètres indiqués sont les diamètres extérieures. Par ailleurs les coefficients de dilatation mentionnés sont les coefficients moyens dans l'intervalle de température indiqué. En réalité, les coefficients ne sont pas rigoureusement constants quand la température varie et on ne peut pas compenser exactement dans tout l'intervalle de température.

EXEMPLE 1 : Art antérieur.

Trente six éléments actifs en alumine de longueur 820 mm présentant un coefficient de dilatation de

$6,6 \times 10^{-6}/°C$, sont disposés dans une enveloppe cylindrique simple en acier inoxydable de type Z30C13 de longueur 820 mm, de diamètre 400 mm et présentant un coefficient de dilatation de $11,5 \times 10^{-6}/°C$. L'écart de dilatation entre les éléments actifs et l'enveloppe est de 1,1 mm lorsque l'on passe de 20°C à 300°C.

EXEMPLE 2 : Art antérieur

Un élément actif en alumine présente une longueur de 1000 mm et un coefficient de dilatation de $6,6 \times 10^{-6}/°C$ ; on prend une enveloppe de l'art antérieur en polyacétal chargé ; il s'agit du produit vendu sous le nom HOSTAFORM C.9023 GFK, marque de la Société HOECHST. Son coefficient de dilatation est de $50 \times 10^{-6}/°C$. L'enveloppe a une longueur de 1000 mm et un diamètre de 80 mm. Lorsque le module passe de 20°C à 100°C, l'écart de dilataiton entre l'élément actif et l'enveloppe est de 3,5 mm.

EXEMPLE 3

Pour les mêmes éléments actifs que dans l'exemple 1, on prend une enveloppe selon l'invention comportant :
- Un cylindre intérieur de longueur 745 mm, de diamètre 390 mm et d'épaisseur 3 mm, en acier inoxydable Z30C13 présentant un coefficient de dilatation de $11,5 \times 10^{-6}/°C$.
- Un cylindre extérieur de même longueur, de même épaisseur et en même matériau que le cylindre intérieur et présentant un diamètre de 410 mm.
- Un cylindre intermédiaire de longueur 670 mm, de diamètre 400 mm, et d'épaisseur 3 mm, en acier inoxydable Z8CNDT 17-12 présentant un coefficient de dilation de $17,5 \times 10^{-6}/°C$.

Ces cylindres sont assemblés conformément au procédé illustré dans la figure 6.

Le module comporte également une chandelle mixte à tube et à tiges pleines conformément à la figure 4. Elle est constituée de la manière suivante:
- Le tube central 70 a un diamètre de 40 mm, une épaisseur de 4 mm et une longueur de 745 mm. Les trois tiges 90 ont un diamètre de 15 mm et une longueur de 745 mm ; comme le tube 70 elles sont dans le même acier que les cylindres intérieur et extérieur formant l'enveloppe.
- Les tiges 80 ont un diamètre de 15 mm et une longueur de 670 mm et sont dans le même acier que le cylindre intermédiaire de l'enveloppe.
    le tube 70 a été soudé tandis que les tiges 80 et 90 ont été boulonnées sur des brides intermédiaires.

Lorsque ce module selon l'invention passe de 20°C à 300°C, l'écart de dilatation entre les éléments actifs et l'enveloppe est inférieur à 0,1 mm. Ce résultat est à comparer avec celui de l'exemple 1.

EXEMPLE 4

Pour les mêmes éléments actifs en alumine que dans l'exemple 1, on constitue un module du type décrit dans la figure 5 et comprenant :
- une enveloppe non compensée en dilatation, de diamètre 390 mm, d'épaisseur 5 mm et de longueur 820 mm, en acier inoxydable Z30 C13 ayant un coefficient de dilatation de $11,5 \times 10^{-6}/°C$,
- trente éléments actifs,
- sept chandelles dont chacune comprend
    . un tube intérieur de longueur 745 mm, de diamètre 20 mm et d'épaisseur 3 mm en acier Z 30C13,
    . un tube extérieur de diamètre 34 mm, de même longueur, même épaisseur et même composition,
    . un tube intermédiaire de longueur 670 mm, de diamètre 27 mm et d'épaisseur 3 mm en acier Z 8CNDT 17 ayant un coefficient de dilatation de $17,5 \times 10^{-6}/°C$.

Ces tubes sont raccordés les uns aux autres par vissage sur des bagues.
L'ensemble des 30 éléments actifs et des sept chandelles est disposé suivant une configuration de réseau hexagonal, de manière à former un hexagone régulier dont le centre et les six sommets sont occupés par les chandelles.
- une première plaque d'extrémité soudée à une extrémité de l'enveloppe,
- une deuxième plaque d'extrémité qui est raccordée à l'autre extrémité de l'enveloppe par un joint métallique souple permettant un mouvement relatif de 5 mm parallèlement à l'axe du module.

Quand la température passe de 20°C à 300°C, l'écart de dilatation entre éléments actifs et chandelles est inférieur à 0,1 mm. L'écart de dilatation entre d'une part l'enveloppe, d'autre part les éléments actifs et les chandelles est de 1,1 mm. Il est encaissé par le joint métallique souple.

EXEMPLE 5 (à comparer à l'exemple 2)

Pour un élément actif en alumine et de longueur 1000 mm, on prend une enveloppe selon l'invention comportant :
- Un cylindre intérieur de longueur 934 mm, de diamètre 80 mm et d'épaisseur 5 mm, en polyacétal chargé présentant un coefficient de dilatation de 50 x 10⁻⁶/°C : le produit est le HOSTAFORM C 9023 GFK précité.
- Un cylindre extérieur de même longueur, de même épaisseur et en même matériau que le cylindre intérieur mais présentant un diamètre de 104 mm.
- Un cylindre intermédiaire de longueur 868 mm, de diamètre 92 mm d'épaisseur 5 mm, et en polyacétal non chargé présentant un coefficient de dilatation de 100 x 10⁻⁶/°C. On utilise le produit ULTRAFORM marque de la Société HOECHST.

Ces trois cylindres sont assemblés par collage.

Lorsqu'un tel module passe de 20°C à 100°C, l'écart de dilatation entre les éléments actifs et l'enveloppe est inférieur à 0,2 mm. On voit le progrès apporté par l'invention.

EXEMPLE 6

Pour dix-huit éléments actifs en carbure de silicium présentant un coefficient de dilatation de 4,5 x 10⁻⁶/°C et une longueur de 1000 mm, on prend une enveloppe selon l'invention comportant :
- Un cylindre intérieur de longueur 970 mm, de diamètre 219 mm et d'épaisseur 2 mm, en acier inoxydable Z6CND16 -4 présentant un coefficient de dilatation de 10,8 x 10⁻⁶/°C.
- Un cylindre extérieur de même longueur, de même épaisseur et en même matériau que le cylindre intérieur et présentant un diamètre de 231 mm.
- Un cylindre intermédiaire de longueur 940 mm, de diamètre 225 mm, et d'épaisseur 2 mm, en acier inoxydable Z35NCW15 présentant un coefficient de dilatation de 17,5 x 10⁻⁶/°C.

Ces trois cylindres ont été soudés sur des brides intermédiaires, comme illustré par la figure 7.

L'écart de dilation entre les éléments actifs et l'enveloppe, lorsque l'on passe de 20°C à 300°C, est inférieur à 0,1 mm.

EXEMPLE 7

Pour un élément actif en carbone de longueur 1000 mm, et présentant un coefficient de dilatation de 3,0 x 10⁻⁶/°C, on réalise une enveloppe selon l'invention comportant :
- Un cylindre intérieur de longueur 800 mm, de diamètre 30 mm et d'épaisseur 2 mm, en acier inoxydable à 36% de nickel (INVAR) présentant un coefficient de dilatation de 6,0 x 10⁻⁶/°C.
- Un cylindre extérieur de longueur 933 mm, de diamètre 40 mm et d'épaisseur 2 mm, en acier inoxydable Z12C13 présentant un coefficient de dilatation de 10,8 x 10⁻⁶/°C.
- Un cylindre intermédiaire de longueur 733 mm, de diamètre 35 mm et d'épaisseur 2 mm, en acier inoxydable Z2CNDT 17-12 présentant un coefficient de dilatation de 16,2 x 10⁻⁶/°C.

Ces trois cylindres sont vissés sur des bagues intermédiaires conformément à la structure illustrée dans la figure 11 ; ces bagues sont en acier Z2CNDT 17-12.

Lorsqu'un tel module passe de 20°C à 200°C, l'écart de dilatation entre les éléments actifs et l'enveloppe est inférieur à 0,1 mm.

**Revendications**

1. Module (1) pour éléments cylindriques rigides à membrane de séparation, de filtration ou de transformation catalytique, lesdits éléments (2) étant logés dans une enveloppe globalement cylindrique parallèle à ces éléments, et fermée par une première plaque d'extrémité (4) et une seconde plaque d'extrémité (5) où sont fixées les extrémités desdits éléments par l'intermédiaire de joints (6, 7), caractérisé par le fait que ces plaques d'extrémité sont reliées par au moins une entretoise constituée d'au moins trois pièces oblongues juxtaposées, la première pièce (10) étant solidaire de ladite première plaque d'extrémité (4), la troisième pièce (30) étant solidaire de ladite seconde plaque d'extrémité (5),
la seconde pièce (20) étant fixée aux extrémités libres (12, 31) de ladite première et ladite troisième pièce, les matériaux de ces trois pièces étant choisis de manière que leur dilatation globale soit aussi égale que possible à celle desdits éléments actifs.

2. Module selon la revendication 1, caractérisé par le fait que ladite entretoise constitue ladite enveloppe.

3. Module selon la revendication 1, caractérisé par le fait que ledit module comporte une ou plusieurs entretoises formant une ou plusieurs chandelles (25) disposées entre lesdites plaques d'extrémité (4, 5).

4. Module selon la revendication 1, caractérise par le fait que ledit module comporte une entretoise formant ladite enveloppe et au moins une entretoise formant au moins une chandelle (40, 50, 60).

5. Module selon l'une des revendications précédentes, caractérisé par le fait que ladite entretoise est formée de trois pièces cylindriques coaxiales (40, 50, 60).

**6.** Module selon la revendication 5, caractérisé par le fait que des moyens de calage latéral (43) sont prévus entre lesdites pièces (40), et/ou entre au moins une desdites pièces et une des plaques d'extrémité (4).

**7.** Module selon l'une des revendications 5 et 6, caractérisé par le fait que lesdites pièces cylindriques (110, 120, 130) sont solidarisées au niveau de leurs extrémités (112, 121) directement par soudage, frettage, ou collage.

**8.** Module selon l'une des revendications 5 et 6, caractérisé par le fait que lesdites pièces cylindriques (171, 172, 173) sont solidarisées au niveau de leurs extrémités par l'intermédiaire de bagues (175, 176, 177, 178) soudées, vissées, frettées, ou collées.

**9.** Module selon la revendication 8, caractérisé par le fait que lesdites bagues (177, 178, 181, 182) constituent des cales entre lesdites pièces cylindriques.

**10.** Module selon la revendication 3, caractérisé par le fait que chaque pièce de ladite chandelle est formée de n tiges pleines (70, 80, 90) parallèles entre elles et auxdits éléments actifs.

**11.** Module selon la revendication 10, caractérisé par le fait que lesdites tiges passent dans des bagues de guidage latéral (15, 16) dans lesquelles soit elles coulissent, soit elles sont fixées.

**12.** Module selon la revendication 3, caractérisé par le fait que ladite enveloppe est formée d'une pièce cylindrique (14) dont une extrémité est fixée rigidement à ladite première plaque d'extrémité (5) et dont l'autre extrémité est reliée de manière étanche à ladite seconde plaque d'extrémité (4) par l'intermédiaire d'un joint déformable (17).

**13.** Module selon la revendication 12, caractérisé par le fait que ledit joint déformable est choisi parmi les joints de type glissant, soufflet en métal ou en élastomère.

**14.** Module selon la revendication 10, caractérisé par le fait que l'extrémité d'au moins une desdites tiges pénètre dans un trou borgne d'une plaque d'extrémité à des fins de calage latéral.

**Claims**

**1.** A module (1) for rigid cylindrical membrane elements used for separation, filtration, or catalytic transformation, said elements (2) being received in a vessel which is generally cylindrical and parallel to these elements and is closed by a first end plate (4) and a second end plate (5) to which the ends of said elements are fixed through seals (6, 7), the module being characterized in that said end plates are interconnected by at least one spacer constituted by at least three juxtaposed oblong parts, the first part (10) being fixed to said first end plate (4), the third part (30) being fixed to said second end plate (5), and the second part (20) being fixed to the free ends (12, 31) of said first and third parts, the materials from which said three parts are made being selected in such a manner as to ensure that their overall expansion is as equal as possible to the expansion of said active elements.

**2.** A module according to claim 1, characterized in that said spacer constitutes said vessel.

**3.** A module according to claim 1, characterized in that said module includes one or more spacers forming one or more props (25) disposed between said end plates (4, 5).

**4.** A module according to claim 1, characterized in that said module includes a spacer constituting said vessel together with at least one spacer constituting at least one prop (40, 50, 60).

**5.** A module according to any preceding claim, characterized in that said spacer comprises three parts (40, 50, 60) which are cylindrical and coaxial.

**6.** A module according to claim 5, characterized in that lateral adjustment means (43) are provided between said parts, and/or between at least one of said parts and one of the end plates (4).

**7.** A module according to claim 5 or 6, characterized in that said cylindrical parts (110, 120, 130) are directly fixed together at their ends (112, 121) by welding, shrinking, or gluing.

**8.** A module according to claim 5 or 6, characterized in that said cylindrical parts (171, 172, 173) are fixed together at their ends via rings (175, 176, 177, 178) to which they are welded, screwed, shrunk on, or glued.

9. A module according to claim 8, characterized in that said rings (177, 178, 181, 182) constitute centering means between said cylindrical parts.

10. A module according to claim 3, characterized in that each part of said prop is constituted by n solid rods (70, 80, 90) which are parallel with one another and with said active elements.

11. A module according to claim 10, characterized in that said rods pass through lateral guidance rings (15, 16) through which they slide or to which they are fixed.

12. A module according to claim 3, characterized in that said vessel is formed by a single cylindrical part (14) having one end rigidly fixed to said first end plate (5) and having its other end connected in sealed manner to said second end plate (4) via a deformable seal (17).

13. A module according to claim 12, characterized in that said deformable seal is selected amongst sliding seals, metal or elastomer bellows seals.

14. A module according to claim 10, characterized in that the end of at least one of said rods penetrates into a blind hole in an end plate for the purpose of lateral adjustment.

**Patentansprüche**

1. Modul (1) für starre, zylindrische Membranelemente zur Trennung, Filterung oder katalytischen Umwandlung, bei dem die Elemente (2) in einer im wesentlichen zylindrischen, parallel zu den Elementen verlaufenden Hülle untergebracht sind, die durch eine erste Endplatte (4) und eine zweite Endplatte (5) verschlossen ist, an denen die Enden der Elemente über Dichtungen (6, 7) befestigt sind, dadurch gekennzeichnet, daß diese Endplatten über mindestens ein Zwischenglied miteinander verbunden sind, das aus mindestens drei langgestreckten, nebeneinanderliegenden Teilen besteht, wobei das erste Teil (10) fest mit der ersten Endplatte (4) und das dritte Teil (30) fest mit der zweiten Endplatte (5) verbunden ist, während das zweite Teil (20) an den freien Enden (12, 31) des ersten und des dritten Teils befestigt ist und die Materialien der drei Teile so gewählt sind, daß ihre Gesamtdehnung möglichst genau derjenigen der aktiven Elemente entspricht.

2. Modul nach Anspruch 1, dadurch gekennzeichnet, daß das Zwischenglied die genannte Hülle bildet.

3. Modul nach Anspruch 1, dadurch gekennzeichnet, daß der Modul ein oder mehrere Zwischenglied aufweist, die eine oder mehrere Stützen (25) bilden, welche zwischen den Endplatten (4, 5) angeordnet sind.

4. Modul nach Anspruch 1, dadurch gekennzeichnet, daß der Modul ein Zwischenglied, das die Hülle bildet, sowie mindestens ein Zwischenglied aufweist, das mindestens eine Stütze (40, 50, 60) bildet.

5. Modul nach einem vorhergehenden Anspruch, dadurch gekennzeichnet, daß das Zwischenglied aus drei koaxialen, zylindrischen Teilen (40, 50, 60) besteht.

6. Modul nach Anspruch 5, dadurch gekennzeichnet, daß seitliche Abstützmittel (43) zwischen den genannten Teilen (40) und/oder zwischen mindestens einem der Teile und einer der Endplatten (4) vorgesehen sind.

7. Modul nach Anspruch 5 oder 6, dadurch gekennzeichnet, daß die zylindrischen Teile (110, 120, 130) an ihren Enden (112, 121) direkt durch Schweißen, Schrumpfen oder Kleben fest miteinander verbunden sind.

8. Modul nach Anspruch 5 oder 6, dadurch gekennzeichnet, daß die zylindrischen Teile (171, 172, 173) an ihren Enden durch angeschweißte, eingeschraubte, verschrumpfte, oder angeklebte Ringe (175, 176, 177, 178) fest miteinander verbunden sind.

9. Modul nach Anspruch 8, dadurch gekennzeichnet, daß die Ringe (177, 178, 181, 182) Klemmklötze zwischen den zylindrischen Teilen bilden.

10. Modul nach Anspruch 3, dadurch gekennzeichnet, daß jedes Teil der Stütze aus n massiven Stäben (70, 80, 90) besteht, die untereinander und zu den aktiven Elementen parallel verlaufen.

11. Modul nach Anspruch 10, dadurch gekennzeichnet, daß die Stube in Ringe zur Seitenführung (15, 16) eindringen, in denen sie entweder gleiten oder befestigt sind.

12. Modul nach Anspruch 3, dadurch gekennzeichnet, daß die Hülle aus einem zylindrischen Teil (14) besteht, dessen eines Ende starr mit der ersten Endplatte (5), und dessen anderes Ende über eine verformbare Dichtung (17) dicht mit der zweiten Endplatte (4) verbunden ist.

13. Modul nach Anspruch 12, dadurch gekennzeichnet, daß die verformbare Dichtung unter den Gleitdichtungen und Dehnungsbalgdichtungen aus Metall oder Elastomer ausgewählt ist.

14. Modul nach Anspruch 10, dadurch gekennzeichnet, daß das Ende mindestens eines der Stäbe zur seitlichen Justierung in ein Sackloch einer Endplatte eindringt.

FIG.1

FIG.2

# FIG.3

# FIG.4

# FIG.5

# FIG.6

# FIG.7

# FIG.8

# FIG.9

# FIG.10

# FIG.11

14